Europäisches Patentamt

(19) European Patent Office

Office européen des brevets

(11) Publication number: **0 316 502 B1**

# EUROPEAN PATENT SPECIFICATION

(45) Date of publication of patent specification: 25.09.91    (51) Int. Cl.⁵: **G03B 17/52, G03B 17/04**

(21) Application number: 87890259.2

(22) Date of filing: 18.11.87

(54) **Compact folding camera construction.**

(43) Date of publication of application:
24.05.89 Bulletin 89/21

(45) Publication of the grant of the patent:
25.09.91 Bulletin 91/39

(84) Designated Contracting States:
**DE FR GB**

(56) References cited:
**US-A- 4 664 497**
**US-A- 4 723 140**

(73) Proprietor: **POLAROID CORPORATION**
**549 Technology Square**
**Cambridge Massachusetts 02139(US)**

(72) Inventor: **Whiteside, George D.**
**4 Robbins Road**
**Lexington Massachusetts 02173(US)**
Inventor: **Johnson, Bruce K.**
**27 Summmer Street**
**Andover Massachusetts 01810(US)**

(74) Representative: **Holzer, Walter, Dipl.-Ing. et al**
**Patentanwälte, Dipl.-Ing. Dr. techn. Schütz**
**Alfred, Dipl.-Ing. Holzer Walter, Dipl.-Ing.**
**Pfeifer Otto, Fleischmanngasse 9**
**A-1040 Wien(AT)**

## Description

This invention relates to a folding camera comprising:

a body configured for receiving photographic film for presentation for exposure at a given focal plane within said body;

a housing section carrying an objective lens at one end, said housing section being mounted on said body for movement between an inoperative folded position wherein said objective lens is located within said body, and an operative, erect position wherein at least said one end of said housing section and said objective lens is positioned upwardly above said body.

A camera of the aforementioned type which has been disclosed in the U.S. Patent 4,664.497 operates with film cassettes containing a stack of self-developing film units having a rupturable pod of processing liquid at the leading end. The pivotally mounted housing section with the objective lens carries a second housing section with a flash unit for pivotal movement relative to the first housing section. In the inoperative position the camera body and the first and second housing sections are nested, which makes the camera extremely compact in the storage mode. The prior art disclosure, however, describes no way of how to incorporate a reflex-through-the-lens viewing system into such a compact folding camera.

Furthermore, a two-component self-developing film system has become known. Commonly assigned U.S. Patents No. 4,630.912 and 4,630.915 disclose developments by which the two-component film system disclosed in U.S. Patent No. 3,907.563 is incorporated in a cassette system which substantially solves the problems associated with handling, packaging and storage of the film both prior to and after it has been loaded into a camera for sequential exposure and processing of successive film frames. In the two-component film system of U.S. Patent No. 3,907.563, an image receiving film component, which is not sensitive to actinic light, is impregnated with an alkaline, liquid processing agent. The negative film component includes a web-like support coated by a polymeric acid layer, a timing layer, a dye developer layer and a silver halide layer. After exposure of the silver halide layer on the negative component, the two sheets are brought together in face-to-face contact as a laminate with the several active coating layers sandwiched between the supporting substrates of the respective components. The processing agent operates to transfer the latent image formed by exposure of the silver halide layer of the negative to the image-receiving layer directly behind the transparent support of the receiver or positive sheet component. The acid layer in the original negative sheet neutralizes the alkaline processing fluid but under the control of the timing interlayer situated between the acid layer and the remaining layers of the composite laminate.

The two component system of the aforementioned patent is less expensive and, in many ways, superior to present commercially available instant film systems which rely on a combination of complex film unit assemblages and require precision in processing apparatus to achieve the correct spread of processing fluid, usually supplied in a rupturable pod forming part of the film unit, throughout the area of the final photograph. The major problems presented to a viable commercial system using the two component film system of U.S. Patent No. 3,907.563, lie in the need for keeping separate the positive and negative film components until after exposure and in the need for hermetically sealing the liquid impregnated positive component to assure retention and availability of the liquid processing agent until it is needed for processing the film system after exposure. These problems have been addressed and essentially circumvented by U.S. Patents No. 4,630.912 and No. 4,630.915.

A principal object of the present invention, therefore, is to provide an extremely compact folding camera adapted for use with cassette-contained film systems, which is adaptable to single lens reflex operation and preferably to the processing of two-component instant film systems.

In accordance with the present invention, the camera comprises a reflex through-the-lens viewing system including a viewing path extending through said objective lens and reflected by a plurality of mirrors to a viewing eyepiece, and one of said mirrors is mounted in said body forwardly of said focal plane to form a recess in said body between said one mirror and said focal plane, and said objective lens is positioned rearwardly of said one mirror within said body recess when said housing section is in its folded condition.

By this way the invention provides a folding camera with single lens reflex operation which can be folded for storage purposes in an extremely compact mannter.

Preferringly the reflex through-the-lens viewing system comprises

a first mirror mounted in said body in inclined relation to said given path so as to direct scene light rays from said given path toward said focal plane;

a second mirror comprising a double sided mirror mounted in said body for movement between a viewing position overlying said focal plane, wherein the one side of said double sided mirror facing away from said focal plane redirects light back to said first mirror, and an exposure position overlying said first mirror, wherein the other side of said double sided mirror directs scene light from said given path to said focal plane, said one side of said double sided mirror being configured for reflecting scene light received from said first mirror rearwardly to again impinge on said first mirror for a second reflection therefrom along an inclined path extending both forwardly and downwardly at an angle to said given path of said lens; an opening provided in the rear of said camera body for viewing along a viewing path spaced between said given path of said lens and said second mirror when said second mirror is in its said viewing position; and

a third mirror mounted in said camera body in intercepting relation to said inclined path for redirecting the second reflection from said first mirror across the camera focal plane toward said opening whereby said viewing configuration provides a compact camera arrangement having a folded viewing path generally confined to the exposure chamber of the camera.

The camera according to the invention is particularly, though not exclusively, adapted for use with cassette-contained two-compact film systems.

Other features and advantages of the present invention will become apparent from the detailed description to follow taken in conjunction with the accompanying drawings in which like parts are designated by like reference numerals.

Fig. 1 is a perspective view of the camera of the present invention in its folded condition;

Fig. 2 is a perspective view of the camera in its erect or operative condition;

Fig. 3 is a plan view of the camera in its folded configuration with internal components illustrated in phantom lines;

Fig. 4 is a cross-section on line 4-4 of Fig. 3;

Fig. 5 is an enlarged cross-section on line 5-5 of Fig. 3;

Fig. 6 is a cross-section similar to Fig. 5 but illustrating the camera in its erect condition;

Fig. 7 is an enlarged fragmentary cross-section showing components illustrated in Fig. 4 but at a larger scale; and

Fig. 8 is a fragmentary bottom view of the camera.

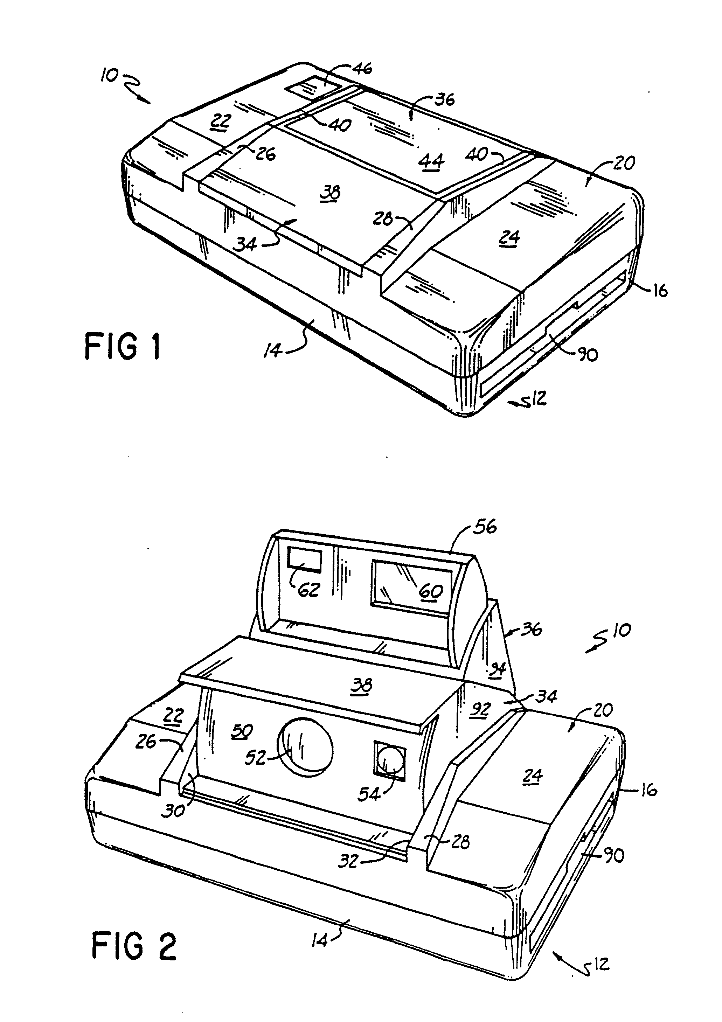

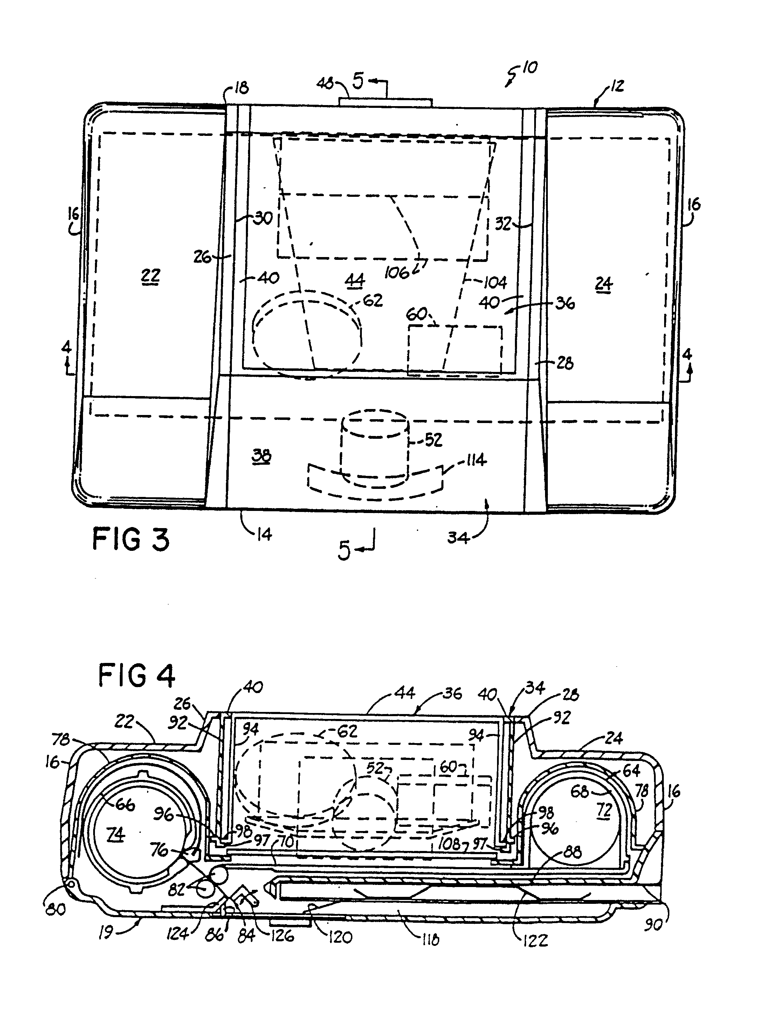

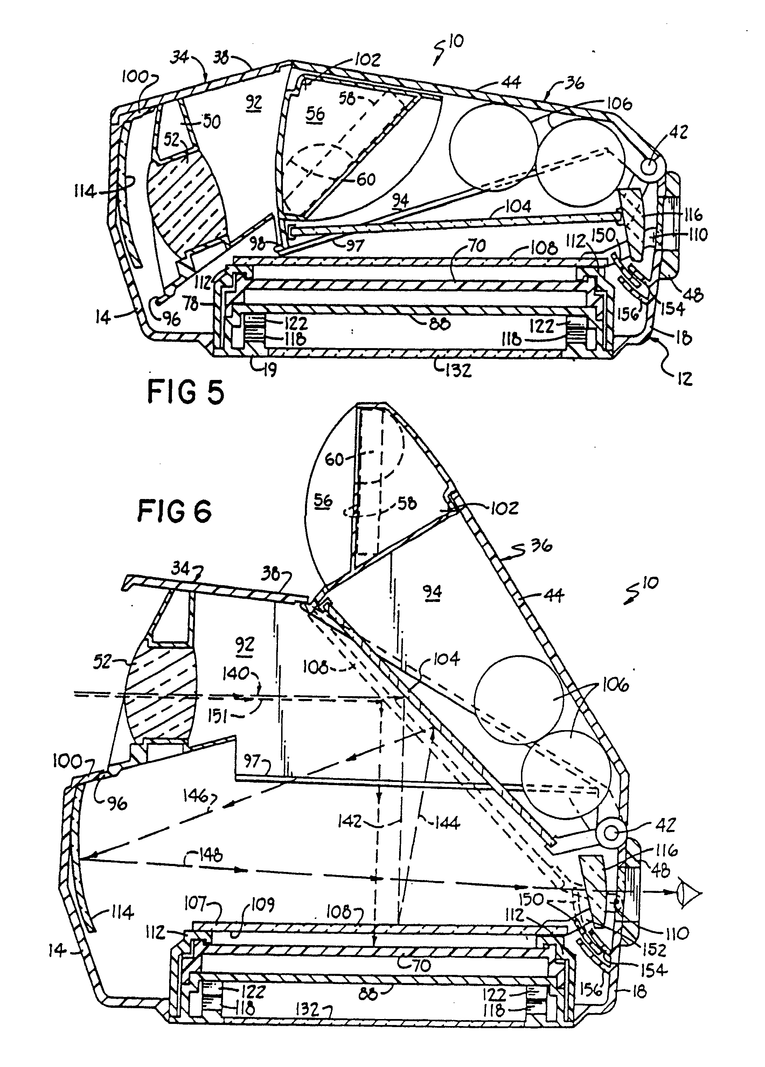

In Figs. 1 - 3 of the drawings, a preferred embodiment of a camera 10 is shown to include a camera body 12 having an exterior configuration approximating a rectangular parallelepiped. The body 12 includes a front wall 14, a pair of end walls 16, a rear wall 18, a bottom wall or door 19 (Fig. 4) and a top wall 20. The top wall 20, as shown most clearly in Figs. 1 - 3, is defined by a pair of end panel sections 22 and 24 extending between and joining with the front, back and end walls 14, 18 and 16, respectively. The panel sections 22 and 24 join at their inboard edges with elevated rail-like formations 26 and 28, respectively. The formations 26 and 28, in turn, define a generally rectangular opening having side edges 30 and 32 (Fig. 3) extending from the front wall 14 to the rear wall 18. The opening between the edges 30 and 32 is closed by nested pivot housings designated generally by the reference numerals 34 and 36. The housing 34 includes a top wall 38 joined through a pair of side arms 40 and by a pivotal pin 42 (Figs. 5 and 6) with the rear wall 18 of the camera body 12. The housing 36 also includes a top wall 44 nested between the side arms 40 and the rear edge of the top wall 38 of the housing 34. The housing 36 is also connected to the rear wall 18 by the pivot pin 42.

In Figs. 1 - 3 of the drawings, the organization of external camera operating components may be seen in their relationship to the camera body 12 and the housings 34 and 36. Specifically, an actuating button 46 (Fig. 1) is presented to the rear of the top wall panel section 22 whereas a viewing eyepiece 48 (Fig. 3) is presented from the rear wall 18. All other externally presented components are supported by the respective pivotal housings 34 and 36. Specifically, as shown in Fig. 2, the housing 34 carries a rigidly connected lens board 50 for supporting an objective lens 52, a photocell window 54 and other exposure control components, such as an internally mounted shutter and shutter actuating assembly (not shown).

The housing 36 carries a pivotal photoflash unit 56 having a front face 58 from which a flash lamp 60 and associated ranging window 62 are presented. As will be seen from the description to follow, the unit 56 pivots from the position shown in Fig. 2, forwardly and downwardly, for movements of the housing 36 to its folded condition.

An understanding of the interior design and construction of the camera 10 may be had by reference to Figs. 3 - 6 of the drawings. In this respect, the body 12 in the illustrated embodiment is adapted to receive a film cassette of a type described in U.S. Patents No. 4,630,912 and No. 4,630,915. A cassette of this type is shown in Fig. 4 and designated generally by the reference numeral 64. The cassette 64 includes a pair of cylinder-like housings 66 and 68 projecting upwardly at opposite ends of a central platform section having a planar deck 70 along which a negative film is passed in a film plane from a coil 72 packaged in the housing 68. A positive film component is supplied from a coil 74 in the other cassette housing 66 which is equipped with a stopper 76 for sealing purposes, all as fully described in the cited copending applications.

To accommodate the shape of the cassette 64, the body 12 includes an interior linear 78 of a configuration to complement the shape of the cassette 64. The liner cooperates with the door 19 to provide a light-tight enclosure for the cassette 64. The door 19 is in the nature of a hinged back pivotally connected to one sidewall 16 by a hinge 80 and secured by a latch (not shown) to the opposite sidewall 16. The hinged back or door supports a pair of processing rollers 82, a cutoff mechanism 84, a slidable film pusher 86 and a photograph storage receptacle defined in part by the bottom wall or door 19 and an inner wall 88 which opens at its outer end in a slot 90 for removal of finished photographs. Additional structural features of the door 19 will be described in more detail below.

As may be seen in Figs. 3 - 6, the pivotal camera housings 34 and 36, together with the operative components supported by these housings, lie in the space between the cassette housings 66, 68 and the corresponding portions of the liner 78. Each of the camera housings, moreover, is of inverted U-shaped configuration as a result of sector-shaped sidewalls 92 depending from the top wall 38 and the side arms 40 of the housing 34 and of similarly shaped side walls 94 depending from the top wall 44 of the housing 36. The bottom edges of the respective side walls 92 and 94 are provided with outwardly projecting flanges or lips 96 and 98 which function to provide light sealing in the erect position and stops to limit opening movement of the respective housings 34 and 36. Additionally, the housing 34 carries inward directed lips or tabs 97 at its lowermost edge to engage the lip 98 of the rear housing 36 as the latter moves to its closed position.

As above indicated, the forwardly disposed or outer housing 34 supports the lens board 50 and the objective lens 52. The lens board 50 is fixed directly to the top wall 38 and between the side walls 92 of the housing 34. The housing 34, and thus the lens board 50 and lens 52, is moved between a folded position illustrated in Fig. 5, in which the top wall 38 rests along the top of the front wall 14, and an erect position, illustrated in Fig. 6, in which the outwardly projecting lips 96 engage under the formations 26 and 28 as well as under a flange 100 at the top of the front wall 14.

The inner and rearwardly disposed housing 36 pivotally supports the photoflash unit 56 from the side walls 94 of the housing 36 for movement about an axis 102 intersecting the side walls 94 of the housing 36. As a result of this pivotal mounting, the unit 56 is positionable pivotally with respect to the housing 36 between a folded condition as shown in Fig. 5 and an erect position as shown in Fig. 6. Additionally, it will be noted that the unit 56, in the folded position, lies between the top wall 44 of the housing 36 and a trapezoidal mirror 104 supported for movement directly with the housing 36 about the pivot pin 42. Finally, a pair of storage cells or batteries 106 are carried by the housing 36 between the top wall 44 and the mirror 104 and rearwardly of the folded photoflash unit 56.

To enable single lens reflex operation of the camera 10, a double-sided mirror 108, the upper side 107 being a Fresnel mirror and the underside 109 being a plane mirror, is independently pivoted from an axis 110 between a viewing position, in which the mirror 108 overlies a frame of negative film lying on the cassette deck 70, and an exposure position, depicted by phantom lines in Fig. 6 and in which the mirror 108 is elevated to an inclined attitude above the cassette deck 70. The viewing position of the mirror 108 is established by a pair of ledges 112 secured directly to the liner 78. As a further incident to viewing, a concave aspheric mirror 114, which in a first approximation is a portion of an ellipsoidal mirror, is fixed behind the front wall 14 and optically aligned with an eye lens 116 positioned forwardly of the external eyepiece 48.

The optical paths, for viewing, with the mirror 108 in its lower position, and for exposure, with the mirror 108 elevated to the upper inclined position shown in Fig. 6, may now be understood. With the mirror 108 in its lower position, image light is transmitted from the scene along a path 140 traversing and spaced above the focal plane represented by the cassette deck 70 (the principal ray being illustrated as a dashed line) to the inclined, fixed mirror 104 and reflected therefrom along a path 142 at approximately 90° to the Fresnel mirror provided by the surface 107 of the double sided mirror 108. The Fresnel mirror, in turn, reflects the image light rearwardly along a path 144 at a small angle to the incoming path 142 to again impinge upon the viewing mirror 104. The reimaging on the fixed mirror 104 redirects the image rays forwardly and downwardly along a path 146 directed between the lens 52 and the leading end 147 of the mirror 108. The downwardly reflected rays travelling along path 146 are, in turn, reflected by the concave mirror 114 along a path 148 which traverses the mirror 108 and the camera focal plane to the eye piece 48. In the illustrated arrangement, the rays reflected from the mirror 114 along the path 148 are at a slight angle to the camera focal plane. This is corrected by a wedge-shaped eye lens 116 so that the image appears to the viewer to be parallel to the image path 140.

The Fresnel-type surface or Fresnel mirror formed on surface 107 of the double-sided mirror 108 is similar to that described in U.S. Patent No. 3,735,685 with the surface rotated approximately 180° to provide a rearward reflection of the image as shown, for example, in U.S. Patent No. 3,760,704.

In the present arrangement in the viewing mode, the image initially reflected from the fixed mirror 104 is reflected from the Fresnel surface 107 to form a conjugate image of the exit pupil of the taking lens 52 formed along the path 146 at a point falling within the exposure volume as defined by the extreme rays (not shown).

As illustrated herein, the concave mirror is positioned forwardly of the film plane or cassette deck 70 to provide a recess for displacement of the lens 52 into the camera base when the camera is folded. However, it should be understood that the mirror position may also be located closer to the leading ledge of the film plane, while retaining the compact viewing path configuration, in camera configurations not requiring such recess.

For the exposure operation, the double sided mirror 128 is driven upwardly to the position shown in dotted lines in Fig. 6 so that the incoming light from the scene, the principal ray being shown by dotted lines and designated as 151, is reflected from a planar mirror 107 provided on the underside of the double mirror 108 to the film unit presented at the focal plane.

Any suitable means for pivoting the double sided mirror 108 between its viewing position overlying the focal plane and its inclined position overlying the inclined mirror 104 are suitable. In this regard, the mirror operation as presented in U.S. Patent No. 3,685,416 may be suitable for this purpose.

Since the eyepiece 48 opens within the camera body in communication with the exposure chamber, it can produce light leakage to the film when the mirror 108 is raised to its inclined position. This light leakage is controlled in the present arrangement by a light blocking arrangement utilizing a light shield or blade 150 which is fixed to and extends between the mirror supports, only one of which is shown and designated as 152. The light blade 150 extending between the pair of supports provides an opaque shield located in position to adequately block any light which may enter the opening in eyepiece 48 when the mirror is moved to its erect position. To ensure adequate light blocking, the blade 150 extends within a channel provided by a pair of fixed blade members 154 and 156 so as to provide a light labyrinth with the blade member 150.

As can be seen in Fig. 6, the blade 150 is designed so that it will not interfere with or block viewing rays traveling from the mirror 114 to the eyepiece 48 in the viewing mode, but will be carried with the double sided mirror 108 upwardly in front of the eye lens 116 to adequately block the light rays during the exposure mode. In this regard, while the blade 150 does not extend above the surface 109 of the double sided mirror 108, the mirror when raised will also provide blocking of rays entering through the eyepiece 48 so that, in conjunction with the shield 115, light is adequately precluded from reaching the focal plane when the mirror is in its erect position. The mirror must be rapidly moved between its film covering position and its inclined position to limit light rays from entering during intermediate positions of the mirror. Consequently, the blade 150, in conjunction with the channel forming blades 154 and 156 provide means for blocking the transmission of light through the eyepiece to the film plane when the mirror 108 is in its exposure position and, more particularly, such means responsive to actuation of the mirror 108 to displace it towards its exposure position.

Other arrangements for precluding light rays can be provided by a multiblade shutter (not shown) mounted in alignment with the eyepiece 48, e.g., between it and the lens 116. The shutter would be arranged so that it would be in an open position during the viewing mode of the camera and driven to a closed light blocking position as the camera is converted from the viewing mode to the exposure mode. That is, the shutter could consist of a pair of mutually coupled blades pivotable between an open and closed position and coupled to either the mirror itself or the driving means of the mirror for pivotable closure of the shutter just prior to or at the initiation of mirror movement toward its exposure position.

For viewing with the mirror 108 in its lower position, image light reflected from a scene to be photographed passes along the paths indicated by the dashed line in Fig. 6. Thus, after passing the objective lens 52, the image light is reflected from the erected mirror 104 supported by the housing 36, downwardly to the upper surface of the mirror 108, slightly rearwardly, back to the mirror 104, then forwardly to the concave mirror 114, and rearwardly through the eye lens 116. When the reflex mirror 108 is moved upwardly during performance of an exposure cycle, light passing from the scene takes the path of the dotted line in Fig. 6, through the lens 52 to the bottom surface of the reflex mirror 108 and down to the negative film supported on top of the cassette deck 70.

The door 19 supports the processing rollers 82, cutoff knife 84, pusher 86 and the inner wall 88 defining a finished photograph receptacle which can provide either light shielded storage, i.e. a darkened imbibition chamber, or a photograph viewing chamber. Extending along the inner surface of the door 19 under the wall 88 are a pair of rails 118 having inclined ramp surfaces 120 facing in the direction of feed from the processing rollers 82. The rails 118 are spaced to be positioned along the side margins of the photographs passing from the processing rollers as may be seen in Figs. 5 and 6 of the drawings, for example. Also, a pair of photograph hold down springs 122 are disposed between the rails 118 and the wall 88. It will be noted further that the rails 118 are of the length such that the ramps 120 do not extend for the full length of a photograph positioned on the rails by the springs 122.

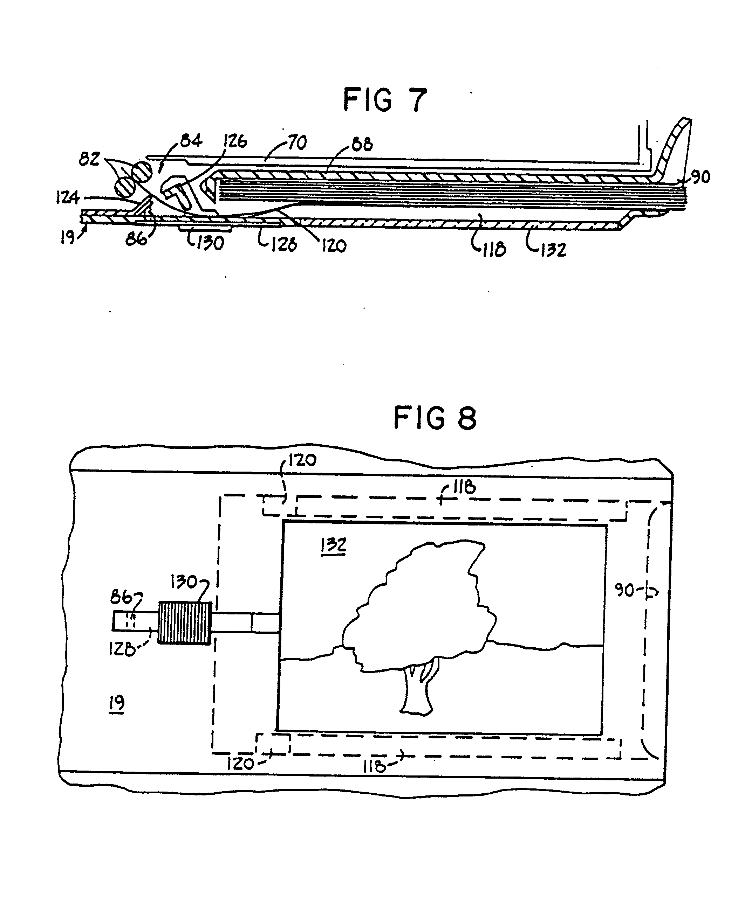

Although the cutting mechanism may take a variety of different specific forms, in the disclosed embodiment the cutting mechanism is in the nature of an inclined anvil 124 and a pivotal shear blade 126. Thus, as the laminate of positive and negative film units passes the processing rollers 82, it is fed downwardly against the door, through the cutting mechanism 84, up along the ramps 120 onto the rails 118 and under any previous photograph existing in the chamber between the wall 88 and the door 19. When the cutting mechanism 84 is actuated, the rear end of the photograph will lie under the anvil 124. It will be noted in Fig. 7 that the pusher 86 underlies the anvil 124 and is carried by a slide 128 having an actuating knob or button 130 projecting to the exterior of the door 19. Thus, after the film has been severed by the cutting mechanism 84, the pusher 86 may be operated manually to advance the completed photograph completely onto the rails 118. Automatic advancement of the pusher may also be provided. Thereafter, the photograph may be removed from the camera for viewing or it may be left in place. In this latter respect, where light shielded imbibition is unnecessary, the door 19 is provided with a transparent window 132 through which the last-taken photograph may be viewed directly without its removal from the camera.

In use, the cassette 64 is first loaded into the camera 10 through the hinge back or door 19 and the leading ends of the respective negative and positive film units 72 and 74 engaged in the nip between the processing rollers 82. In this respect, the film components may include a common leader which is advanced through one exposure cycle as a "dark slide" and removed from the camera.

To erect the camera for use, a latch mechanism (not shown) is released so that the two housings 34 and 36 will be biased by springs (not shown) at the hinge pin 42, upwardly to the position shown in Fig. 6. In the case of the rear housing 36, the flash unit 56 will pivot upwardly to the position shown in Fig. 6 as the housing 36 reaches its final erect position. In the erected condition of the camera, an image to be photographed may be viewed through the eyepiece 48, and the actuating button 46 depressed to initiate an exposure cycle. During the exposure cycle, the mirror 108 raises to the phantom line position shown in Fig. 6, the shutter is actuated and the negative film unit overlying the deck 70 of the cassette will be exposed. Thereafter, the processing rollers 82 are actuated to feed the positive and negative film units into face-to-face contact with each other for processing, through the cutting mechanism 84, and onto the ramps 88 in the chamber between the door 19 and the wall 88. The pusher is then manually actuated to position the photograph where it may be viewed through the window 132.

A releasable, spring biased latch mechanism (not shown) having a release arm (not shown) extending through the rear wall 18 of the camera body is employed to engage and latch the rear housing 36 in its folded position. For example, the latch may be configured to engage the lip 48 of the housing 36 when the latter is in the folded configuration. The housing 36, in turn, through the tabs 47, engages and holds closed the forward housing 34. To insure that the flash unit 56 remains in its folded position during and upon closure, a pair of curved ridge rails (not shown) are provided along the interior surfaces of the side walls 42 of the housing 34 for engagement with the flash unit.

To return the camera components to the folded condition illustrated in Figs. 1 and 5, for example, the photoflash unit 56 is first folded about its pivot 102. The rear housing 36 will then fold within the front housing 34 and then both the rear housing and the front housing will be folded down to the camera body 12.

Thus it will be appreciated that as a result of the present invention, an extremely compact and efficient folding camera is provided particularly for exposing, processing and viewing photographs originating in a two-component film system of the type described.

## Claims

1. A folding camera comprising:

a body (12) configured for receiving photographic film for presentation for exposure at a given focal plane (70) within said body;

a housing section (34) carrying an objective lens (52) at one end (50), said housing section being mounted on said body for movement between an inoperative folded position, wherein said objective lens (52) is located within said body, and an operative, erect position wherein at least said one end (50) of said housing section (34) and said objective lens (52) is positioned upwardly above said body (12);

characterized in that the camera further comprises

a reflex through-the-lens viewing system including a viewing path (140-148) extending through said objective lens (52) and reflected by a plurality of mirrors (104, 108, 114) to a viewing eyepiece (48), one of said mirrors (114) being mounted in said body (12) forwardly of said focal plane (70) to form a recess in said body between said one mirror (114) and said focal plane (70), and said objective lens (52) being positioned rearwardly of said one mirror (114) within said body recess when said housing section (34) is in its folded condition.

2. The camera of claim 1, wherein said reflex through-the-lens viewing system comprises

a first mirror (104) mounted in said body in inclined relation to said given path (140) so as to direct scene light rays from said given path (140) toward said focal plane (70);

a second mirror (108) comprising a double sided mirror mounted in said body (12) for movement between a viewing position overlying said focal plane (70), wherein the one side (107) of said double sided mirror (108) facing away from said focal plane (70) redirects light back to said first mirror (104), and an exposure position overlying said first mirror (104), wherein the other side (109) of said double sided mirror (108) directs scene light from said given path (140) to said focal plane (70), said one side (107) of said double sided mirror (108) being configured for reflecting scene light received from said first mirror (104) rearwardly to again impinge on said first mirror (104) for a second reflection therefrom along an inclined path (146) extending both forwardly and downwardly at an angle to said given path (140) of said lens (52);

an opening (48) provided in the rear (18) of said camera body (12) for viewing along a viewing path spaced between said given path (140) of said lens (52) and said second mirror (108) when said second mirror is in its said viewing position; and

a third mirror (114) mounted in said camera body in intercepting relation to said inclined path (146) for redirecting the second reflection from said first mirror (104) across the camera focal plane (70) toward said opening (48) whereby said viewing configuration provides a compact camera arrangement having a folded viewing path (140-148) generally confined to the exposure chamber of the camera.

3. The camera of claim 2 including light blocking means (150, 154, 156) for blocking light from said opening (48) from reaching the film presented at said focal plane (70) when said second mirror (108) is in its said exposure position.

4. The camera of claim 2 wherein said opening (48) is provided in said camera body (12) for viewing along a path (148) located between the lower edge of said first mirror (104) and the upper surface (107) of said second mirror (108) when said second mirror (108) is in its viewing position.

5. The camera of claim 4 wherein said third mirror (114) redirects said second reflection from said first mirror (104) across said focal plane (70) along a view path (148) at a small angle to said given path (140) of said lens (52), and said camera further comprising an eye lens (116) located over said opening (48) and configured for realigning said view path (148) into parallel with said given path (140).

**Revendications**

1. Appareil photographique pliable comportant :

un corps (12) configuré pour recevoir un film photographique destiné à être soumis à une exposition à un plan focal donné (70) à l'intérieur dudit corps ;

une première partie (34) de boîtier portant une lentille (52) d'objectif à une première (50) de ses extrémités, ladite partie de boîtier étant montée sur le corps en vue d'un déplacement entre une position pliée inactive, dans laquelle la lentille (52) d'objectif se trouve à l'intérieur dudit corps, et une position dépliée active dans laquelle au moins ladite première extrémité (50) de la partie (34) de boîtier et la lentille (52) d'objectif se trouvent en position haute au-dessus du corps (12) ;

**caractérisé** en ce que l'appareil photographique comprend, en outre :

un système de visée réflex à travers l'objectif comprenant un chemin de visée (140-148) s'étendant à travers la lentille (52) d'objectif et réfléchi par une pluralité de miroirs (104, 108, 114) jusqu'à un oculaire de visée (48), un premier (114) desdits miroirs étant monté dans le corps (12) en avant du plan focal (70) afin de former une cavité dans ledit corps entre ledit premier miroir (114) et ledit plan focal (70), et la lentille (52) d'objectif étant positionnée en arrière dudit premier miroir (114) à l'intérieur de ladite cavité de corps lorsque la première partie (34) de boîtier se trouve dans son état plié.

2. Appareil photographique selon la revendication 1, dans lequel le système de visée réflex à travers l'objectif comprend :

un premier miroir (104) monté dans ledit corps et incliné par rapport audit chemin donné (140) de manière à diriger les rayons lumineux de la scène depuis ledit chemin donné (140) en direction du plan focal (70) ;

un deuxième miroir (108) comportant un miroir à double face dans le corps (12) pour se déplacer entre une position de visée se superposant au plan focal (70), dans laquelle la première face (107) du miroir (108) à double face orientée en sens opposé dudit plan focal (70) renvoie la lumière vers le premier miroir (104) et une position d'exposition se superposant au premier miroir (104) dans laquelle l'autre face (109) du miroir à double face (108) dirige la lumière de la scène dudit chemin donné (140) audit plan focal (70), ladite première face (107) du miroir double face (108) étant configurée de façon à réfléchir la lumière de la scène reçue du premier miroir (104) vers l'arrière pour frapper à nouveau le premier miroir (104) pour une deuxième réflexion à partir de celui-ci le long d'un chemin incliné (146) s'étendant à la fois vers l'avant et vers le bas suivant un certain angle par rapport au chemin donné (140) de la lentille (52) ;

une ouverture (48) pratiquée dans l'arrière (18) du corps (12) de l'appareil photographique pour viser le long d'un chemin de visée espacé entre ledit chemin donné (140) de la lentille (52) et ledit deuxième miroir (108) lorsque ce deuxième miroir se trouve dans ladite position de visée ; et

un troisième miroir (114) monté dans ledit corps d'appareil photographique en relation d'interception par rapport audit chemin incliné (146) pour rediriger la deuxième réflexion venant du premier miroir (104) à travers le plan focal (70) de l'appareil photographique vers ladite ouverture (48), grâce à quoi ladite configuration de visée procure un agencement d'appareil photographique compact présentant un chemin de visée plié (140-148) confiné, d'une façon générale, à la chambre d'exposition de l'appareil photographique.

3. Appareil photographique selon la revendication 2, comprenant des moyens (150, 154, 156) de blocage de lumière pour empêcher la lumière venant de ladite ouverture (48) d'atteindre le film présenté audit plan focal (70) lorsque le deuxième miroir (108) se trouve dans sa position d'exposition précitée.

4. Appareil photographique selon la revendication 2, dans lequel ladite ouverture (48) est formée dans ledit corps (12) d'appareil photographique pour viser le long d'un chemin (148) situé entre le bord inférieur du premier miroir (104) et la surface supérieure (107) du deuxième miroir (108) lorsque ce deuxième miroir (108) se trouve dans sa position de visée.

5. Appareil photographique selon la revendication 4, dans lequel le troisième miroir (114) redirige ladite deuxième réflexion depuis ledit premier miroir (104) à travers ledit plan focal (70) le long d'un chemin de visée (148) suivant un petit angle par rapport au chemin donné (140) de ladite lentille (52), et l'appareil photographique comprenant, en outre, une lentille (116) d'oculaire disposée au-dessus de l'ouverture (48) et configurée pour réaligner ledit chemin de visée (148) parallèlement audit chemin donné (140).

## Patentansprüche

1. Faltkamera mit:

einem Gehäuse (12), das zur Aufnahme eines photographischen Filmes ausgebildet ist, um diesen in einer vorgegebenen Fokalebene (70) innerhalb des Gehäuses zur Belichtung darzubieten;

einem Gehäuseabschnitt (34), der an einem Ende (50) eine Objektivlinse (52) trägt, wobei der Gehäuseabschnitt am Gehäuse zwischen einer gefalteten Ruhestellung, in welcher die Objektivlinse (52) innerhalb des Gehäuses angeordnet ist, und einer aufgerichteten Betriebsstellung bewegbar montiert ist, in der zumindest das genannte eine Ende (50) des Gehäuseabschnittes (34) und die Objektivlinse (52) oberhalb des Gehäuses (12) angeordnet sind;

dadurch gekennzeichnet, daß die Kamera weiters aufweist

ein Spiegelreflex-Suchersystem durch das Objektiv, mit einem Sucherweg (140-148), der durch die Objektivlinse (52) verläuft und über mehrere Spiegel (104, 108, 114) zu einem Sucherokular (48) reflektiert wird, wobei einer dieser Spiegel (114) im Gehäuse (12) vor der Fokalebene (70) montiert ist, um im Gehäuse zwischen ebendiesem Spiegel (114) und der Fokalebene (70) eine Ausnehmung zu bilden, und wobei die Objektivlinse (52) hinter diesem Spiegel (114) innerhalb dieser Gehäuseausnehmung angeordnet ist, wenn der genannte Gehäuseabschnitt (34) sich in seiner Faltstellung befindet.

2. Kamera nach Anspruch 1, bei welcher das Spiegelreflex-Suchersystem durch das Objektiv aufweist

einen ersten Spiegel (104), der im Gehäuse relativ zum genannten vorgegebenen Weg (140) geneigt montiert ist, um die Szenenlichtstrahlen vom vorgegebenen Weg (140) zur Fokalebene (70) zu richten;

einen zweiten Spiegel (108), der einen doppelseitigen Spiegel umfaßt, welcher im Gehäuse (12) zwischen einer die Fokalebene (70) überlagernden Sucherstellung, in welcher die der Fokalebene (70) abgekehrte Seite (107) des doppelseitigen Spiegels (108) das Licht zum ersten Spiegel (104) zurückleitet, und einer den ersten Spiegel (104) überlagernden Belichtungsstellung bewegbar angeordnet ist, in der die andere Seite (109) des doppelseitigen Spiegels (108) das Szenenlicht vom vorgegebenen Weg (140) zur Fokalebene (70) richtet, und die genannte eine Seite (107) des doppelseitigen Spiegels (108) dazu ausgebildet ist, das vom ersten Spiegel (104) empfangene Szenenlicht nach rückwärts zu reflektieren, so daß es erneut auf dem ersten Spiegel (104) auftrifft, um von diesem ein zweites Mal gemäß eines schrägen Weges (146) reflektiert zu werden, der sich sowohl nach vorne als auch nach unten unter einem Winkel zum vorgegebenen Weg (140) der Objektivlinse (52) erstreckt;

eine Öffnung (48), die in der Rückseite (18) des Kameragehäuses (12) zum Suchen entlang eines Sucherweges vorgesehen ist, der Abstand vom vorgegebenen Weg (140) der Objektivlinse (52) und vom zweiten Spiegel (108) hat, wenn sich der zweite Spiegel in seiner Sucherstellung befindet; und

einen dritten Spiegel (114), der im Kameragehäuse den schrägen Weg (146) durchsetzend montiert ist, um die zweite Reflexion vom ersten Spiegel (104) über die Kamerafokalebene (70) zur genannten Öffnung (48) umzuleiten, wobei die Sucherkonfiguration eine Kompaktkameraanordnung mit einem gefalteten Sucherweg (140-148) bildet, der im allgemeinen auf die Belichtungskammer der Kamera begrenzt ist.

3. Kamera nach Anspruch 2, mit Lichtabblendeinrichtungen (150, 154, 156), die das Licht aus der genannten Öffnung (48) daran hindern, den in der Fokalebene (70) dargebotenen Film zu erreichen, wenn sich der zweite Spiegel (108) in seiner Belichtungsstellung befindet.

4. Kamera nach Anspruch 2, bei welcher die genannte Öffnung (48) im Kameragehäuse (12) zum Suchen entlang eines Weges vorgesehen ist, der sich zwischen der unteren Kante des ersten Spiegels (104) und der oberen Fläche (107) des zweiten Spiegels (108) befindet, wenn der zweite Spiegel (108) in seiner Sucherstellung ist.

5. Kamera nach Anspruch 4, bei welcher der dritte Spiegel (114) die zweite Reflexion vom ersten Spiegel (104) über die Fokalebene (70) entlang eines Sucherweges (148) mit einem kleinen Winkel zum vorgegebenen Weg (140) der Objektivlinse (52) zurückwirft, und die Kamera ferner eine Augenlinse (116) enthält, die oberhalb der genannten Öffnung (48) angeordnet und zur Wiederausrichtung des Sucherweges (148) parallel zum vorgegebenen Weg (140) ausgebildet ist.

FIG 1

FIG 2

FIG 3

FIG 4

FIG 5

FIG 6

# FIG 7

# FIG 8